# EUROPEAN PATENT SPECIFICATION

(11) **EP 3 084 178 B1**
(45) Date of publication and mention of the grant of the patent: **28.03.2018**
(21) Application number: 14871637.6
(22) Date of filing: 08.12.2014
(51) Int. Cl.: F02C 7/05

(54) **LAYERED ICE LINER**
GESCHICHTETE EISISOLIERUNG
REVÊTEMENT EN COUCHE DE GLACE

(30) Priority: 20.12.2013 US 201361919213 P
(43) Date of publication of application: 26.10.2016
(73) Proprietor: United Technologies Corporation, Farmington, CT 06032 (US)
(72) Inventor: CLARKSON, Steven, Cheshire, Connecticut 06410 (US); BERGETHON, Richard B., Holt, Michigan 48842 (US)
(74) Representative: Leckey, David Herbert
(86) International application number: PCT/US2014/069073
(87) International publication number: WO 2015/094764

(56) References cited:
- EP-A2- 2 623 725
- EP-A2- 2 623 726
- EP-A2- 2 623 726
- EP-B1- 0 623 734
- US-A- 4 534 698
- US-A- 5 160 248
- US-A- 5 160 248

## Description

### BACKGROUND

The present invention relates generally to fan case liners in gas turbine engines in aircraft, and, more specifically, to liners disposed aft of fan rotors and designed to resist impact from objects such as ice.

Gas turbine engines, particularly turbo-fan engines, include a fan case liner on the inside surface of the fan case to suppress engine noise and shape the aerodynamic flowpath across the fan. The fan case liner is generally made of lightweight material, such as aluminum honeycomb panels, that are susceptible to impact damage from foreign objects ingested into a gas turbine engine from outside. The fan case liner, especially the portions of the fan case liner disposed aft of the fan, is also susceptible to damage or denting from ice impact.

During aircraft operation in cold weather or in colder climates, ice can form and build-up on the fan blades and the rotor shaft when the aircraft is in a holding pattern and the fan is rotating at a relatively low speed. When the aircraft leaves the holding pattern, the centrifugal force generated by the subsequent acceleration of the fan can cause the ice to shed from the fan blades and rotor shaft and fly radially outward and aft of the fan at relatively high velocities where it can impinge upon and damage the fan case liner. This damage to the fan case liner can adversely affect the aerodynamic and acoustic performance of the fan case liner.

Accordingly, portions of the fan case liner aft of the fan are reinforced to better resist ice impact. Some methods for reinforcing the fan case liner aft of the fan include filling the honeycomb panels with composite, covering the honeycomb with a layer of interior layer metal, or by decreasing the size of the cells in the honeycomb panels to increase the density of the honeycomb panels in portions of the honeycomb panels that are susceptible to damage.

Filling the honeycomb panels with composite or increasing the density of the honeycomb panels increases the overall weight of the fan case liner and gas turbine engine. Increasing the weight of the gas turbine engine decreases the operating efficiency of the aircraft. Furthermore, to reinforce the fan case liner as described above, the fan case liner must be manufactured and assembled in segments, which increases the complexity of the fan case liner and introduces seams and ridges that can disrupt the aerodynamic performance of the fan case liner.

US 5160248 A discloses a prior art liner assembly as set forth in the preamble of claim 1.

EP 2623726 A discloses a prior art fan case.

### SUMMARY

In one aspect of the invention, there is provided a liner assembly for lining of a gas turbine engine as set forth in claim 1.

The invention also provides a gas turbine engine as set forth in claim 9.

Features of embodiments of the invention are set forth in the dependent claims.

Persons of ordinary skill in the art will recognize that other aspects and embodiments of the present invention are possible in view of the entirety of the present disclosure, including the accompanying figures.

### BRIEF DESCRIPTION OF THE DRAWINGS

FIG. 1 is a quarter-sectional view of an embodiment of a gas turbine engine.
FIG. 2 is a cross-sectional view of an embodiment of a liner assembly of the gas turbine engine.
FIG. 3 is another cross-sectional view of an embodiment of the liner assembly taken along line A-A of FIG. 2.

While the above-identified drawing figures set forth one or more embodiments of the invention, other embodiments are also contemplated. In all cases, this disclosure presents the invention by way of representation and not limitation. It should be understood that numerous other modifications and embodiments can be devised by those skilled in the art, which fall within the scope of the invention. The figures may not be drawn to scale, and applications and embodiments of the present invention may include features and components not specifically shown in the drawings.

### DETAILED DESCRIPTION

In general, the present invention provides a liner assembly disposed radially within a fan case and downstream from a fan of a gas turbine engine. The liner assembly includes a honeycomb core extending between a first end and a second end, and an impact resistant layer is disposed radially inward from the honeycomb core. The impact resistant layer extends axially from the first end of the honeycomb core to an interior point disposed axially between the first end and the second end of the honeycomb core. An interior layer is disposed radially inward from the honeycomb core and the ice impact layer and covers the honeycomb core and the ice impact layer. The interior layer defines a smooth and substantially uninterrupted flowpath surface downstream from the plurality of fans. The ice impact layer and the interior layer together reinforce the liner assembly against impact from ice or foreign objects ingested by the gas turbine engine, and the liner assembly is also relatively less complex than prior art liner assemblies.

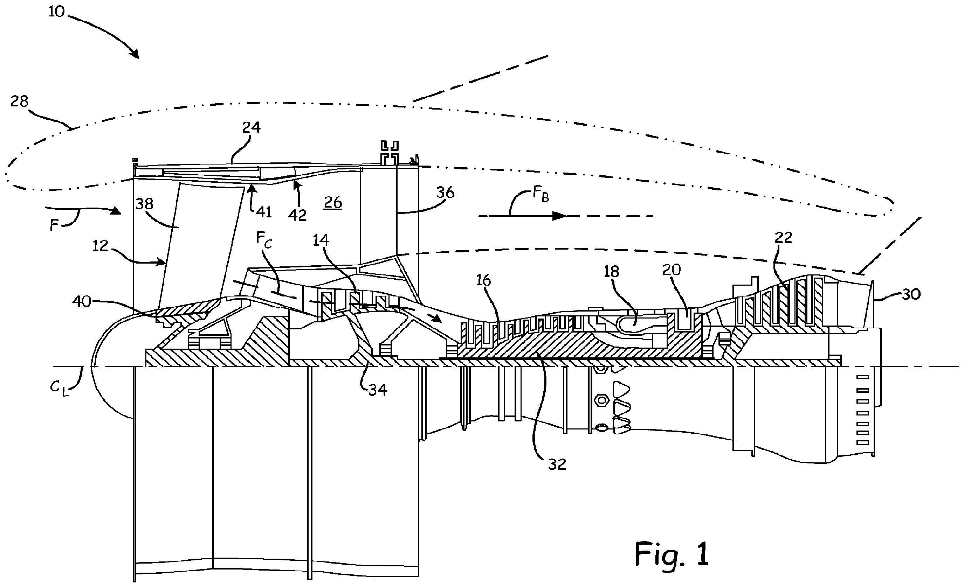

FIG. 1 is a cross-sectional view of gas turbine engine 10, in a turbofan embodiment. Other configurations are possible in further embodiments, such as low bypass ratio gas turbine engines. As shown in FIG. 1, gas turbine engine 10 includes fan 12, low pressure compressor (LPC) section 14, high pressure compressor (HPC) section 16, combustor 18, high pressure turbine (HPT) section 20, low pressure turbine (LPT) section 22, fan case 24, bypass duct 26, fan inlet cowl 28, exhaust nozzle 30, core flowpath F_{C}, high pressure (HP) shaft 32, low pressure (LP) shaft 34, and structural guide vanes 36. Engine centerline CL denotes a central axis of gas turbine engine 10 in a direction parallel to the axial direction. Fan 12, LPC section 14, HPC section 16, combustor 18, HPT section 20, and LPT section 22 are arranged in flow series between fan inlet cowl 28 and exhaust nozzle 30 along engine centerline CL. As embodied in FIG. 1, fan 12 includes a plurality of fan blades 38 carried by fan hub 40. Basic operation of gas turbine engine 10 is well known and is not described in detail here. Gas turbine engine 10 can further include other components and features not specifically shown or discussed.

Fan case 24 is disposed around fan 12 and can be formed from composite material. Fan blades 38 of fan 12 are circumferentially arranged in cascade around fan hub 40 and engine centerline CL. Fan 12 can be rotationally coupled, directly or indirectly, to LP shaft 34. In some embodiments, such as the embodiment of FIG. 1, fan 12 is coupled to LP shaft 34 via a geared fan drive mechanism, providing independent fan speed control. As shown in FIG. 1, fan 12 is forward-mounted and provides thrust by accelerating flow downstream through bypass duct 26. In operation of gas turbine engine 10, airflow F enters a flowpath defined by fan inlet cowl 28 and can divide into a core airflow and a bypass airflow, downstream of fan 12. The core airflow propagates along core flowpath F_{C} through LPC section 14, HPC section 16, combustor 18, HPT section 20, and LPT section 22. The bypass airflow propagates along bypass flowpath F_{B} through bypass duct 26. Structural guide vanes 36 can be disposed inside bypass duct 26 and extend between fan case 24 and a core case. As the bypass airflow flows from fan 12 into bypass duct 26, structural guide vanes 36 help de-swirl the bypass airflow into an axial direction substantially parallel to engine centerline CL. Structural guide vanes 36 also connect the core case to fan case 24 and center the core case and the engine core inside fan case 24.

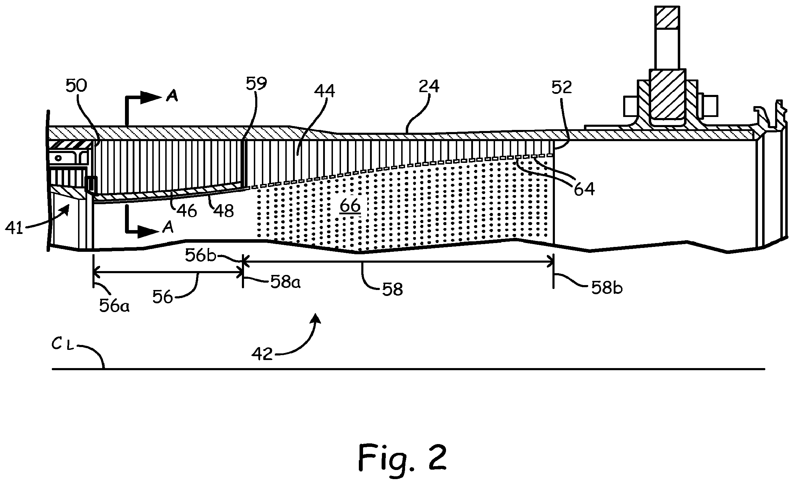

Fan case 24 is positioned generally aftward and downstream from fan inlet cowl 28, with both fan case 24 and fan inlet cowl 28 circumscribing the flowpath and fan blades 38. Fan containment liner 41 is positioned around the flowpath and fan blades 38 and at least partially radially inward from fan case 24. Liner assembly 42 is generally annular and is disposed aft of fan containment liner 41 and fan blades 38, and is disposed at least partially radially inward from fan case 24. Liner assembly 42 is discussed below in greater detail with respect to FIG. 2.

FIG. 2 is a cross-sectional view of an embodiment of liner assembly 42 of gas turbine engine 10. As shown in FIG. 2, liner assembly 42 can include honeycomb core 44, impact resistant layer 46, and interior layer 48. Honeycomb core 44 can include first end 50, second end 52, first end 50 being disposed axially forward of second end 52. Honeycomb core 44 further includes forward segment 56, and aft segment 58. Forward segment 56 can include forward end 56a and aft end 56b. Aft segment 58 can include forward end 58a and aft end 58b. Interior layer 48 can include flowpath surface 62 and a plurality of perforations 64. A detailed discussion on the assembly of liner assembly 42 and the other above mentioned elements is now provided below.

Honeycomb core 44 is disposed radially inward of fan case 24 and aft of fan blades 38. Honeycomb core 44 can be connected to fan case 24 by a film adhesive. Honeycomb core 44 extends axially between first end 50 and second end 52. Honeycomb core 44 can be formed of aluminum or an aluminum alloy and includes a plurality of generally radially extending cells (for example, Helmoholtz resonators), the cells having a hexagonal geometry or other geometry that aides honeycomb core 44 in acoustically reducing noise within fan case 24. As illustrated, the cells of honeycomb core 44 can vary in the radial dimension, that is, cell thickness, between cells in the axial direction. As shown in the embodiment of FIG. 2, axially adjacent cells of honeycomb core 44 can vary in thickness such that liner assembly 42 tapers in thickness in the downstream direction.

Honeycomb core 44 can be axially segmented such that honeycomb core 44 includes forward segment 56 and aft segment 58. Aft segment 58 of honeycomb core 44 is disposed downstream of forward segment 56 and can directly abut forward segment 56. Forward end 56a of forward segment 56 can define first end 50 of honeycomb core 44 and aft end 56a is disposed axially between first end 50 and second end 52 of honeycomb core 44. Forward end 58a of aft segment 58 can be disposed adjacent aft end 56a of forward segment 56 and aft end 58b of aft segment 58 can define second end 52 of honeycomb core 44. As discussed above, forward segment 56 of honeycomb core 44 can have the same density as aft segment 58 of honeycomb core 44 such that all of honeycomb core 44 is substantially uniform in density. Segmenting honeycomb core 44 axially into forward segment 56 and aft segment 58 can increase the ease of manufacturing honeycomb core 44 and handling of honeycomb core 44 during the assembling process. This is because segmenting allows honeycomb core 44 to be manufactured, handled, and maneuvered in pieces. Forward segment 56 can taper in a downstream direction from forward end 56a to aft end 56b, and aft segment 58 can taper in a downstream direction from forward end 58a to aft end 58b. Tapering forward segment 56 and aft segment 58 helps to form and contour the flowpath within fan case 24.

Each of the segments of the honeycomb core 44 can respectively have a substantially uniform density, that is, the cells have substantially equal sizing in the engine fore-aft direction, or cell length. Making the density of honeycomb core 44 substantially uniform helps reduce manufacturing complexity and cost of liner assembly 42.

Impact resistant layer 46 is disposed at least partially radially inward from honeycomb core 44 and can be disposed on forward segment 56 of honeycomb core 44 such that impact resistant layer 46 axially extends from forward end 56a to aft end 56b of forward segment 56. Impact resistant layer 46 can be bonded to forward segment 56 by a film adhesive. A radial thickness of forward segment 56 can be selected to accommodate impact resistant layer 46 such that impact resistant layer 46 does not create a radially inner offset, that is a relatively raised shelf or ledge between forward segment 56 and aft segment 58 at forward end 58b. For example, as shown in FIG. 2, forward segment 56 can be less thick at aft end 56b than aft segment 58 at forward end 58b. Impact resistant layer 46 can be less thick radially than honeycomb core 44 and can be formed from layered plies of poly-paraphenylene terephthalamide (e.g., Kevlar ® material).

Because impact resistant layer 46 is disposed on forward segment 56 and aft of fan blades 38, impact resistant layer 46 is positioned where liner assembly 42 would generally be impacted by ice shed off of fan blades 38 during operation of gas turbine engine 10. Impact resistant layer 46 can be radially thicker than interior layer 48 (described below) and, in some embodiments, can be approximately three times thicker than interior layer 48.

Interior layer 48 is disposed radially inward from honeycomb core 44 and impact resistant layer 46, and can be bonded to both impact resistant layer 46 and aft segment 58 of honeycomb core 44 by a film adhesive. Interior layer 48 can extend axially from first end 50 of honeycomb core 44 to second end 52 of honeycomb core 44 and can completely cover honeycomb core 44 and impact resistant layer 46. Interior layer 48 can also cover seam 59 between forward segment 56 and aft segment 58 and can define flowpath surface 62 extending relatively smoothly and uninterrupted between first end 50 and second end 52 of honeycomb core 44.

As discussed above, interior layer 48 is thinner than impact resistant layer 46. Interior layer 48 can be a covering or skin formed from layered plies of fiberglass. In the embodiment of FIG. 2, interior layer 48 can formed from five layers of fiberglass plies while impact resistant layer 46 can be formed of fifteen layers of poly-paraphenylene terephthalamide (e.g., Kevlar ® material) plies. Together, interior layer 48 and impact resistant layer 46 help protect liner assembly 42 against ice shed off of fan blades 38 during operation of gas turbine engine 10.

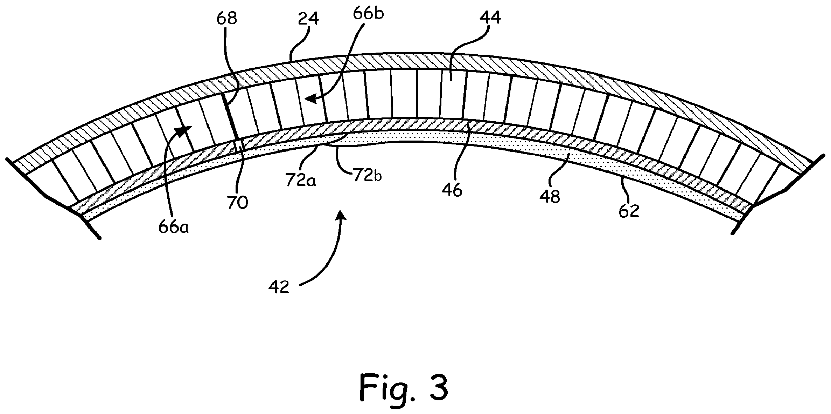

A plurality of mutually axially offset perforations 64 can be formed in interior layer 48 between forward end 58a and aft end 58b of aft segment 58 of honeycomb core 44 (axially aligned with aft segment 58), so that the perforations 64 each communicate with one of the cells of honeycomb core 44 in aft segment 58. Together, perforations 64 and honeycomb core 44 in aft segment 58 acoustically dampen noise generated within gas turbine engine 10 proximate fan 12. Interior layer 48 can remain free of perforations 64 upstream from forward end 58a of aft segment 58. As discussed below with reference to FIG. 3, honeycomb core 44 and impact resistant layer 46 can be segmented circumferentially into a plurality of panels 66.

FIG. 3 is a cross-sectional view of liner assembly 42 taken along line A-A of FIG. 2. In addition to the above mentioned elements, liner assembly 42 can include panels 66 (shown in FIG. 3 as panel 66a and panel 66b) with seam 68 and gap 70. Interior layer 48 can also include edges 72. Panels 66 can be formed by segmenting honeycomb core 44 and impact resistant layer 46 circumferentially. As with axially segmenting honeycomb core 44 into forward segment 56 and aft segment 58, discussed above, circumferentially segmenting honeycomb core 44 and impact resistant layer 46 can increase ease of manufacturing liner assembly 42 and handling of liner assembly 42 during the assembling process. That is, segmenting allows honeycomb core 44 and impact resistant layer 46 to be manufactured, handled, and maneuvered in pieces.

Once assembled within fan case 24, panels 66 are positioned adjacent one another and circumferentially arrayed around the flowpath and engine centerline CL. FIG. 3 shows, by way of example, first panel 66a disposed next to second panel 66b. Seam 68 can be disposed between honeycomb core 44 of first panel 66a and honeycomb core 44 of second panel 66b. Gap 70 can be disposed between impact resistant layer 46 on first panel 66a and impact resistant layer 46 on second panel 66b. Honeycomb core 44 can have a substantially uniform density circumferentially across panels 66.

Interior layer 48, introduced above, is disposed radially inward from panels 66 and can be bonded by a film adhesive to impact resistant layer 46 of each panel 66. Interior layer 48 is segmented circumferentially to form edges 72a and 72b. Edges 72 of each segment of interior layer 48 are circumferentially offset from seam 68 and gap 70 such that interior layer 48 extends over and covers seam 68 and gap 70. Because interior layer 48 extends over seam 68 and gap 70, interior layer 48 sufficiently protects seam 68 and gap 70 from impact damage without having to increase the density of honeycomb core 44 at seam 68. Edges 72 of each segment of interior layer 48 are overlapped and bonded to edges 72 of adjacent segments of interior layer 48 in a lap or shiplap joint to form a relatively smooth transition between segments of interior layer 48 so as to assist maintaining flowpath surface 62 relatively smooth.

In alternative embodiments falling outside the scope of the claims, panels 66 can be formed by segmenting honeycomb core 44 apart from impact resistant layer 46. Impact resistant layer 46 can be segmented circumferentially into segments that differ in number and circumferential length than panels 66 of honeycomb core 44. Once assembled, gap 70 (or a splice) between segments of impact resistant layer 46 can be circumferentially misaligned from seam 68 between panels 66 of honeycomb core 44. Circumferentially misaligning gap 70 and seam 68 causes impact resistant layer 46 to cover seam 68 and reinforce honeycomb core 44 at seam 68. In alternative embodiments, honeycomb core 44 can also include inserts of higher cell-density core circumferentially aligned with gaps 70 (or splices) between segments of impact resistant layer 46 to provide additional impact resistance at the location of gaps 70 (or the splices).

### Possible Benefits:

Persons of ordinary skill in the art will recognize that liner assembly 42 of the present invention can provide numerous advantages and benefits. Some examples of those advantages and benefits are as follows. Liner assembly 42 provides honeycomb core 44, impact resistant layer 46, and interior layer 48. Interior layer 48 defines relatively smooth and substantially uninterrupted flowpath surface 62 downstream from fan blades 38. Because flowpath surface 62 is relatively smooth and substantially uninterrupted, flowpath surface 62 increases the efficiency of gas turbine engine 10 by reducing flow losses downstream from fan 12. Impact resistant layer 46 and interior layer 48 together reinforce liner assembly 42 against impact from ice or other objects ingested by gas turbine engine 10. Honeycomb core 44 and interior layer 48 can assist in acoustically dampening noise generated by fan 12 downstream from impact resistant layer 46. Liner assembly 42 can also be relatively less complex than prior art liner assemblies because honeycomb core 44 can have a substantially uniform density and can be made up of fewer pieces.

### Summation

Any relative terms or terms of degree used herein, such as "substantially", "essentially", "generally" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transitory vibrations and sway movements, temporary alignment or shape variations induced by operational conditions, and the like.

While the invention has been described with reference to an exemplary embodiment(s), it will be understood by those skilled in the art that various changes may be made to elements thereof without departing from the scope of the invention. In addition, many modifications may be made to adapt a particular situation or material to the teachings of the invention without departing from the scope thereof. For example, while the above description describes honeycomb core 44 as having a substantially uniform density, the density of honeycomb core 44 can be varied circumferentially and/or axially without departing from the scope of the invention. Therefore, it is intended that the invention not be limited to the particular embodiment(s) disclosed, but that the invention will include all embodiments falling within the scope of the appended claims.

## Claims

1. A liner assembly (42) for lining of a gas turbine engine (10), the liner assembly (42) comprising:
a honeycomb core (44) having at least two axially adjacent segments, including a forward segment (56) and an aft segment (58);
an impact resistant layer (46) disposed against and radially inward of the honeycomb forward segment (56); and
a radially interior layer (48), defining a relatively substantially uninterrupted flowpath over at least a portion of the impact resistant layer (46) and the aft segment (58), the interior layer (46) extending against and radially interior of both the impact resistant layer (46) and the honeycomb aft segment (58);
**characterised in that**:
the honeycomb core (44) and the impact resistant layer (46) together are circumferentially segmented into a plurality of panels (66) arranged around the axis of the gas turbine engine (10), and the interior layer (48) covers a seam (68) between adjacent panels (66a, 66b) of the plurality of panels (66);
the interior layer (48) is segmented circumferentially to form edges (72a, 72b), and the edges (72a, 72b) of each segment of the interior layer (48) are circumferentially offset from the seam (68) such that the interior layer (48) extends over and covers the seam (68); and
the edges (72a, 72b) of each segment of the interior layer (48) are overlapped and bonded to the edges (72a, 72b) of adjacent segments of the interior layer (48).

2. The liner assembly (42) of claim 1, wherein the impact resistant layer (46) axially extends from an axially forward end (56a) of the forward segment (56) to an axially aft end (56b) of the forward segment (56).

3. The liner assembly (42) of claim 2, wherein the interior layer (48) axially extends from the axially forward end (56a) of the forward segment (56) to an axially aft end (58b) of the aft segment (58).

4. The liner assembly of claim 3, wherein a plurality of perforations (64) are formed in the interior layer (48) downstream from the axially aft (56b) end of the forward segment (56) of the honeycomb core (44).

5. The liner assembly (42) of any preceding claim, wherein the impact resistant layer (46) is formed from layered plies of poly-paraphenylene terephthalamide.

6. The liner assembly (42) of any preceding claim, wherein the interior layer (48) is formed from fiberglass.

7. The liner assembly (42) of any preceding claim, wherein the impact resistant layer (46) is thicker than the interior layer (48).

8. The liner assembly (42) of claim 7, wherein the impact resistant layer (46) is approximately three times thicker than the interior layer (48).

9. A gas turbine engine (10) comprising:
a plurality of fan blades (38) arranged about an axis of the gas turbine engine (10);
a fan case (24) disposed around the plurality of fan blades (38); and
a liner assembly (42) as set forth in any preceding claim disposed within the fan case (24) and aft of the fan blades (38).

10. The gas turbine engine (10) of claim 9, wherein the fan case (24) is made of composite material.

11. The gas turbine engine (10) of claim 9 or 10, wherein the interior layer (48) defines a flowpath surface (62) downstream from the plurality of fan blades (38).

12. The gas turbine engine of any of claims 9 to 11, wherein the aft segment (58) of the honeycomb core (44) directly abuts the forward segment (56) of the honeycomb core (44), the forward segment (56) of the honeycomb core (44) has the same cell density as the aft segment (58) of the honeycomb core, and the forward segment tapers in a downstream direction from an axially forward end (56a) of the forward segment (56) to an axially aft end (56b) of the forward segment (56).

13. The gas turbine engine (10) of claim 12, wherein the aft segment (58) tapers in a downstream direction from an axially forward end (58a) of the aft segment (58) to an axially aft end (58b) of the aft segment (58), optionally wherein the axially forward end (58a) of the aft segment (58) is thicker than the axially aft end (56b) of the forward segment (56).

14. The gas turbine engine (10) of any of claims 9 to 13, wherein a thickness of the liner assembly (42) tapers downstream.

15. The gas turbine engine (10) of any of claims 9 to 14, wherein a plurality of perforations (64) are formed in the interior layer (48) downstream from the forward segment (56) of the honeycomb core (44) and the interior layer (48) is free of perforations upstream from the aft segment (58) of the honeycomb core (44).

## Patentansprüche

1. Isolierungsbaugruppe (42) zum Isolieren eines Gasturbinenmotors (10), wobei die Isolierungsbaugruppe (42) Folgendes umfasst:
einen Wabenkern (44), der zumindest zwei axial benachbarte Segmente aufweist, darunter ein vorderes Segment (56) und ein hinteres Segment (58);
eine schlagfeste Schicht (46), die gegen das und radial innerhalb des vorderen Wabensegments (56) angeordnet ist; und
eine radial innere Schicht (48), die einen im Wesentlichen relativ ununterbrochenen Flussweg über zumindest einen Abschnitt der schlagfesten Schicht (46) und des hinteren Segments (58) definiert, wobei sich die innere Schicht (46) gegen und radial innerhalb sowohl der schlagfesten Schicht (46) als auch des hinteren Wabensegments (58) erstreckt;
**dadurch gekennzeichnet, dass**:
der Wabenkern (44) und die schlagfeste Schicht (46) zusammen umlaufend in eine Vielzahl von Platten (66) segmentiert sind, die um die Achse des Gasturbinenmotors (10) angebracht sind und die innere Schicht (48) eine Naht (68) zwischen benachbarten Platten (66a, 66b) aus der Vielzahl von Platten (66) bedeckt;
die innere Schicht (48) umlaufend segmentiert ist, um Ränder (72a, 72b) zu bilden und die Ränder (72a, 72b) jedes Segments der inneren Schicht (48) umlaufend zu der Naht (68) versetzt sind, sodass sich die innere Schicht (48) über die Naht (68) erstreckt und diese bedeckt; und
die Ränder (72a, 72b) jedes Segments der inneren Schicht (48) überlappend und mit den Rändern (72a, 72b) von benachbarten Segmenten der inneren Schicht (48) verbunden sind.

2. Isolierungsbaugruppe (42) nach Anspruch 1, wobei sich die schlagfeste Schicht (46) axial von einem axial vorderen Ende (56a) des vorderen Segments (56) zu einem axial hinteren Ende (56b) des vorderen Segments (56) erstreckt.

3. Isolierungsbaugruppe (42) nach Anspruch 2, wobei sich die innere Schicht (48) axial von dem axial vorderen Ende (56a) des vorderen Segments (56) zu einem axial hinteren Ende (58b) des hinteren Segments (58) erstreckt.

4. Isolierungsbaugruppe nach Anspruch 3, wobei eine Vielzahl von Perforationen (64) in der inneren Schicht (48) stromabwärts des axial hinteren (56b) Endes des vorderen Segments (56) des Wabenkerns (44) gebildet ist.

5. Isolierungsbaugruppe (42) nach einem vorhergehenden Anspruch, wobei die schlagfeste Schicht (46) aus geschichteten Lagen aus Polyparaphenylenterephthalamid gebildet ist.

6. Isolierungsbaugruppe (42) nach einem vorhergehenden Anspruch, wobei die innere Schicht (48) aus Fiberglas gebildet ist.

7. Isolierungsbaugruppe (42) nach einem vorhergehenden Anspruch, wobei die schlagfeste Schicht (46) dicker als die innere Schicht (48) ist.

8. Isolierungsbaugruppe (42) nach Anspruch 7, wobei die schlagfeste Schicht (46) ungefähr dreimal dicker als die innere Schicht (48) ist.

9. Gasturbinenmotor (10), umfassend:
eine Vielzahl von Lüfterflügeln (38), die um eine Achse des Gasturbinenmotors (10) angebracht ist;
ein Lüftergehäuse (24), das um die Vielzahl von Lüfterflügeln (38) angeordnet ist; und
eine Isolierungsbaugruppe (42) nach einem vorhergehenden Anspruch, die innerhalb des Lüftergehäuses (24) und hinter den Lüfterflügeln (38) angeordnet ist.

10. Gasturbinenmotor (10) nach Anspruch 9, wobei das Lüftergehäuse (24) aus Verbundmaterial gefertigt ist.

11. Gasturbinenmotor (10) nach Anspruch 9 oder 10, wobei die innere Schicht (48) eine Flusswegfläche (62) stromabwärts der Vielzahl von Lüfterflügeln (38) definiert.

12. Gasturbinenmotor nach einem der Ansprüche 9 bis 11, wobei das hintere Segment (58) des Wabenkerns (44) direkt an das vordere Segment (56) des Wabenkerns (44) angrenzt, das vordere Segment (56) des Wabenkerns (44) die gleiche Zelldichte wie das hintere Segment (58) des Wabenkerns aufweist und sich das vordere Segment in eine stromabwärtige Richtung von einem axial vorderen Ende (56a) des vorderen Segments (56) zu einem axial hinteren Ende (56b) des vorderen Segments (56) verjüngt.

13. Gasturbinenmotor (10) nach Anspruch 12, wobei sich das hintere Segment (58) in eine stromabwärtige Richtung von einem axial vorderen Ende (58a) des hinteren Segments (58) zu einem axial hinteren Ende (58b) des hinteren Segments (58) verjüngt, wobei optional das axial vordere Ende (58a) des hinteren Segments (58) dicker als das axial hintere Ende (56b) des vorderen Segments (56) ist.

14. Gasturbinenmotor (10) nach einem der Ansprüche 9 bis 13, wobei sich eine Dicke der Isolierungsbaugruppe (42) stromabwärts verjüngt.

15. Gasturbinenmotor (10) nach einem der Ansprüche 9 bis 14, wobei eine Vielzahl von Perforationen (64) in der inneren Schicht (48) stromabwärts des vorderen Segments (56) des Wabenkerns (44) gebildet ist und die innere Schicht (48) frei von Perforationen stromaufwärts des hinteren Segments (58) des Wabenkerns (44) ist.

## Revendications

1. Ensemble de revêtement (42) pour le revêtement d'une turbine à gaz (10), l'ensemble de revêtement (42) comprenant :
un noyau alvéolaire (44) ayant au moins deux segments axialement adjacents, y compris un segment avant (56) et un segment arrière (58) ;
une couche résistante aux chocs (46) disposée radialement vers l'intérieur contre le segment alvéolaire avant (56) ; et
une couche radialement intérieure (48), définissant un chemin d'écoulement sensiblement relativement ininterrompu sur au moins une partie de la couche résistante aux chocs (46) et du segment arrière (58), la couche intérieure (46) s'étendant radialement vers l'intérieur contre à la fois la couche résistante aux chocs (46) et le segment alvéolaire arrière (58) ;
**caractérisé en ce que** :
le noyau alvéolaire (44) et la couche résistante aux chocs (46) sont tous deux segmentés circonférentiellement en une pluralité de panneaux (66) agencés autour de l'axe de la turbine à gaz (10), et la couche intérieure (48) couvre une couture (68) entre les panneaux adjacents (66a, 66b) de la pluralité de panneaux (66) ;
la couche intérieure (48) est segmentée circonférentiellement pour former des bords (72a, 72b), et les bords (72a, 72b) de chaque segment de la couche intérieure (48) sont décalés circonférentiellement par rapport à la couture (68) de telle sorte que la couche intérieure (48) s'étend sur la couture (68) et la couvre ; et
les bords (72a, 72b) de chaque segment de la couche intérieure (48) sont superposés et collés aux bords (72a, 72b) de segments adjacents de la couche intérieure (48).

2. Ensemble de revêtement (42) selon la revendication 1, dans lequel la couche résistante aux chocs (46) s'étend axialement d'une extrémité axialement avant (56a) du segment avant (56) vers une extrémité axialement arrière (56b) du segment avant (56) .

3. Ensemble de revêtement (42) selon la revendication 2, dans lequel la couche intérieure (48) s'étend axialement de l'extrémité axialement avant (56a) du segment avant (56) vers une extrémité axialement arrière (58b) du segment arrière (58).

4. Ensemble de revêtement selon la revendication 3, dans lequel une pluralité de perforations (64) sont formées dans la couche intérieure (48) en aval de l'extrémité axialement arrière (56b) du segment avant (56) du noyau alvéolaire (44).

5. Ensemble de revêtement (42) selon une quelconque revendication précédente, dans lequel la couche résistante aux chocs (46) est formée à partir de plis superposés de poly(téréphtalamide de paraphénylène).

6. Ensemble de revêtement (42) selon une quelconque revendication précédente, dans lequel la couche intérieure (48) est formée de fibre de verre.

7. Ensemble de revêtement (42) selon une quelconque revendication précédente, dans lequel la couche résistante aux chocs (46) est plus épaisse que la couche intérieure (48).

8. Ensemble de revêtement (42) selon la revendication 7, dans lequel la couche résistante aux chocs (46) est environ trois fois plus épaisse que la couche intérieure (48).

9. Turbine à gaz (10) comprenant :
une pluralité d'aubes de soufflante (38) agencées autour d'un axe de la turbine à gaz (10) ;
un carter de soufflante (24) disposé autour de la pluralité d'aubes de soufflante (38) ; et
un ensemble de revêtement (42) selon une quelconque revendication précédente disposé à l'intérieur du carter de soufflante (24) et à l'arrière des aubes de soufflante (38).

10. Turbine à gaz (10) selon la revendication 9, dans laquelle le carter de soufflante (24) est composé de matériau composite.

11. Turbine à gaz (10) selon la revendication 9 ou 10, dans laquelle la couche intérieure (48) définit une surface de chemin d'écoulement (62) en aval de la pluralité d'aubes de soufflante (38).

12. Turbine à gaz selon l'une quelconque des revendications 9 à 11, dans laquelle le segment arrière (58) du noyau alvéolaire (44) vient en butée directement contre le segment avant (56) du noyau alvéolaire (44), le segment avant (56) du noyau alvéolaire (44) a la même densité cellulaire que le segment arrière (58) du noyau alvéolaire, et le segment avant s'amincit dans une direction aval d'une extrémité axialement avant (56a) du segment avant (56) vers une extrémité axialement arrière (56b) du segment avant (56).

13. Turbine à gaz (10) selon la revendication 12, dans laquelle le segment arrière (58) s'amincit dans une direction aval d'une extrémité axialement avant (58a) du segment arrière (58) vers une extrémité axialement arrière (58b) du segment arrière (58), éventuellement dans laquelle l'extrémité axialement avant (58a) du segment arrière (58) est plus épaisse que l'extrémité axialement arrière (56b) du segment avant (56).

14. Turbine à gaz (10) selon l'une quelconque des revendications 9 à 13, dans laquelle une épaisseur de l'ensemble de revêtement (42) s'amincit vers l'aval.

15. Turbine à gaz (10) selon l'une quelconque des revendications 9 à 14, dans laquelle une pluralité de perforations (64) sont formées dans la couche intérieure (48) en aval du segment avant (56) du noyau alvéolaire (44) et la couche intérieure (48) est exempte de perforations en amont du segment arrière (58) du noyau alvéolaire (44).
